(19) **Europäisches Patentamt / European Patent Office / Office européen des brevets**

(11) **EP 2 075 539 A2**

(12) **EUROPEAN PATENT APPLICATION**

(43) Date of publication:
**01.07.2009 Bulletin 2009/27**

(51) Int Cl.:
***G01C 21/34*** *(2006.01)*

(21) Application number: **08022469.4**

(22) Date of filing: **24.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.12.2007 JP 2007340796**

(71) Applicant: **Aisin AW Co., Ltd.**
**Fujii-cho**
**Anjo-shi,**
**Aichi 444-1192 (JP)**

(72) Inventors:
• **Morimoto, Kyomi**
 **Okazaki-shi**
 **Aichi 444-8564 (JP)**

• **Hayashi, Seiji**
 **Okazaki-shi**
 **Aichi 444-8564 (JP)**
• **Saitou, Yutaka**
 **Okazaki-shi**
 **Aichi 444-8564 (JP)**
• **Burguet, Frederic**
 **Okazaki-shi**
 **Aichi 444-8564 (JP)**
• **Petti, Stephane**
 **Okazaki-shi**
 **Aichi 444-8564 (JP)**

(74) Representative: **Kramer - Barske - Schmidtchen**
**European Patent Attorneys**
**Landsberger Strasse 300**
**80687 München (DE)**

(54) **Navigation device and computer program**

(57)    A navigation device is configured such that, when a user wants to park in an on-street parking zone in the vicinity of a reference position, the navigation device searches for and finds on-street parking zones that are located in the vicinity of the reference position. The navigation device computes a parking cost factor for each of the on-street parking zones that are found, based on various types of information pertaining to each of the on-street parking zones. Based on the computed parking cost factors, the navigation device selects, from among the on-street parking zones that are located in the vicinity of the reference position, the on-street parking zones that will serve as candidates to be passed. The navigation device searches for and finds a route that runs along a road having a selected on-street parking zone.

F I G . 10

ON-STREET PARKING ZONE THAT SATISFIES SPECIFIED CONDITION

ON-STREET PARKING ZONE THAT DOES NOT SATISFY SPECIFIED CONDITION

**Description**

BACKGROUND OF THE INVENTION

1. Field of the Invention

The present invention relates to a navigation device and a computer program that conduct a search for a route for which guidance will be provided to a user.

2. Description of the Related Art

In recent years, a navigation device that provides driving guidance and makes it easy for a driver to arrive at a desired destination has been installed in many vehicles. The navigation device is a device that is capable of detecting a vehicle's current position with a GPS receiver or the like, acquiring map data that corresponds to the current position through a network or from a storage medium such as a DVD-ROM, a HDD, or the like, and displaying the map data on a liquid crystal monitor. The navigation device is also provided with a route search function that, when the desired destination is input, searches for an optimum route from the vehicle's position to the destination. The navigation device then displays the guidance route on a display screen and reliably guides the driver to the desired destination by providing guidance by voice in situations such as when the vehicle approaches an intersection. In addition, some navigation devices have a function that provides guidance to parking sites near the vehicle's current position or in the vicinity of the destination.

For example, in Japanese Patent Application Publication No. JP-A-2001-349740 (Page 6 to Page 7, FIG. 1, and FIG. 2), a technology is described that searches from data pertaining to parking sites for parking sites at or near a destination that the user has input, then from among the search results, displays the parking sites that match what the user wants. These may be the parking sites that are available at a specified date and time, or the parking sites that match conditions such as the vehicle width, the vehicle height, and the model of the user's vehicle. The technology also acquires congestion information and vacancy information for the parking sites. A technology is also described that searches for a route from the vehicle's current position to the displayed parking site and that displays the recommended route on a display.

SUMMARY OF THE INVENTION

The technology that is described in Japanese Patent Application Publication No. JP-A-2001-349740 (Page 6 to Page 7, FIG. 1, and FIG. 2) searches for a route to a parking site that is provided within a specified area that is off of the street. However, so-called on-street parking zones that are formed on-street are also provided in addition to the parking sites that are provided off-street.

On-street parking zones are parking zones that are provided on the street. On-street parking zones are seen especially often in the cities of Europe and North America, and parking in the on-street parking zones is very common.

However, the route searching that is performed by the technology that is described in Japanese Patent Application Publication No. JP-A-2001-349740 does not take the on-street parking zones into account. In a case where the user wants to park in an on-street parking zone, he must search for a vacant parking space while driving along the route to the destination. This is unlike a case where the user parks in an off-street parking site and searches for a parking space only after entering the parking site.

Therefore, in a case where, in the course of searching for an on-street parking zone where he will be able to park while driving to the destination, the user drives past the last vacant parking space, he must turn around after arriving at the destination and drive back to the on-street parking zones that he already passed. In this case, particularly if he is driving to the destination on one-way streets, considerable time will be required in order to drive back to the on-street parking zones that he already passed.

The present invention was devised in order to solve problems with related art, and it is an object of the present invention to provide a navigation device and a computer program that are capable of searching for and finding a route that runs along a road having an on-street parking zone in the vicinity of a reference position.

According to the navigation device in a first aspect of the present invention, it is possible, when the user wants to park the vehicle in an on-street parking zone in the vicinity of the reference position, to find an appropriate route that runs along a road having an on-street parking zone that is a suitable candidate for parking. It is therefore possible to allow the user to park quickly in a suitable on-street parking zone, even in a case where the user is a traveler or the like who is not familiar with the streets.

According to the navigation device that is described in a second aspect, it is possible to find a route that starts from the reference position and runs along a road having an on-street parking zone. It is therefore possible to find a route that corresponds to the position from which the vehicle will start driving.

According to the navigation device that is described in a third aspect, based on the information pertaining to the on-street parking zones, it is possible to identify, among a large number of the on-street parking zones, the on-street parking zones that are suitable places for the user to park and to find a route by giving priority to the roads on which the identified on-street parking zones are provided. It is therefore possible to provide appropriate guidance to the on-street parking zones that the user can use and that are highly convenient, even if there are numerous on-street parking zones for which complicated parking conditions have been established.

According to the navigation device that is described in a fourth aspect, priority can be given to including in the guidance route the on-street parking zones that are close to the reference position. It is therefore possible for the user to park in an on-street parking zone that is closer to the reference position.

According to the navigation device that is described in a fifth aspect, priority can be given to including in the guidance route the on-street parking zones that have low use fees. It is therefore possible for the user to park in an on-street parking zone that has a lower use fee.

According to the navigation device that is described in a sixth aspect, priority can be given to including in the guidance route the on-street parking zones that have long distances over which parking is possible. It is therefore possible to guide the user to an on-street parking zone in which it is more likely that the user will be able to park.

According to the navigation device that is described in a seventh aspect, priority can be given to including in the guidance route the on-street parking zones that are located such that they extend continuously over a plurality of links. It is therefore possible to guide the user to an on-street parking zone in which it is more likely that the user will be able to park.

According to the navigation device that is described in an eighth aspect, priority can be given to including in the guidance route the on-street parking zones that have high vacant space probabilities. It is therefore possible to guide the user to an on-street parking zone in which it is more likely that the user will be able to park.

According to the navigation device that is described in a ninth aspect, it is possible to specify, from among the on-street parking zones that are located on the set guidance route, an on-street parking zone that is located on the first road along the guidance route that the vehicle will travel along, starting from the current position of the vehicle. It is also possible to search anew for a route from the current position of the vehicle to the specified on-street parking zone. Thus, even in a case where the vehicle is not located on the guidance route, it is possible to provide guidance for a route that starts from the current position and runs along a road having an on-street parking zone.

According to the computer program that is described in a tenth aspect, it is possible, when the user wants to park the vehicle in an on-street parking zone in the vicinity of the reference position, to cause the computer to execute the search to find a route that will run along a road having an on-street parking zone that is a suitable candidates for parking. It is therefore possible to allow the user to park quickly in a suitable on-street parking zone, even in a case where the user is a traveler or the like who is not familiar with the streets.

BRIEF DESCRIPTION OF THE DRAWINGS

FIG. 1 is a block diagram that shows a navigation device according to an embodiment;
FIG. 2 shows an example of on-street parking zones that are provided in roadside strips along both sides of a two-lane street;
FIG. 3 is a figure that shows an example of facility data that pertain to on-street parking zones and are stored in a map information data base;
FIG. 4 is a figure that shows a cost factor determination table that is based on use fees;
FIG. 5 is a figure that shows a cost factor determination table that is based on a distance from a driving start position;
FIG. 6 is a flowchart of a guidance route setting processing program according to the embodiment;
FIG. 7 is a flowchart of a sub-processing program for parking zone search processing;
FIG. 8 is a flowchart of a sub-processing program for route search processing;
FIG. 9 is a figure that shows an example of an on-street parking zones list;
FIG. 10 is an example of a guidance route that is set in a case where a search is performed for a route that leads to on-street parking zones in an area that surrounds a destination that serves as a reference position;
FIG. 11 is a flowchart of a driving guidance processing program according to the embodiment;
FIG. 12 is a figure that shows an example of an en route list;
FIG. 13 is a figure that shows a driving guidance screen that is displayed on a liquid crystal display in the navigation device according to the embodiment; and
FIG. 14 is a figure that shows a driving guidance screen that is displayed in a two-screen display mode on the liquid crystal display in the navigation device according to the embodiment.

DETAILED DESCRIPTION OF THE PREFERRED EMBODIMENTS

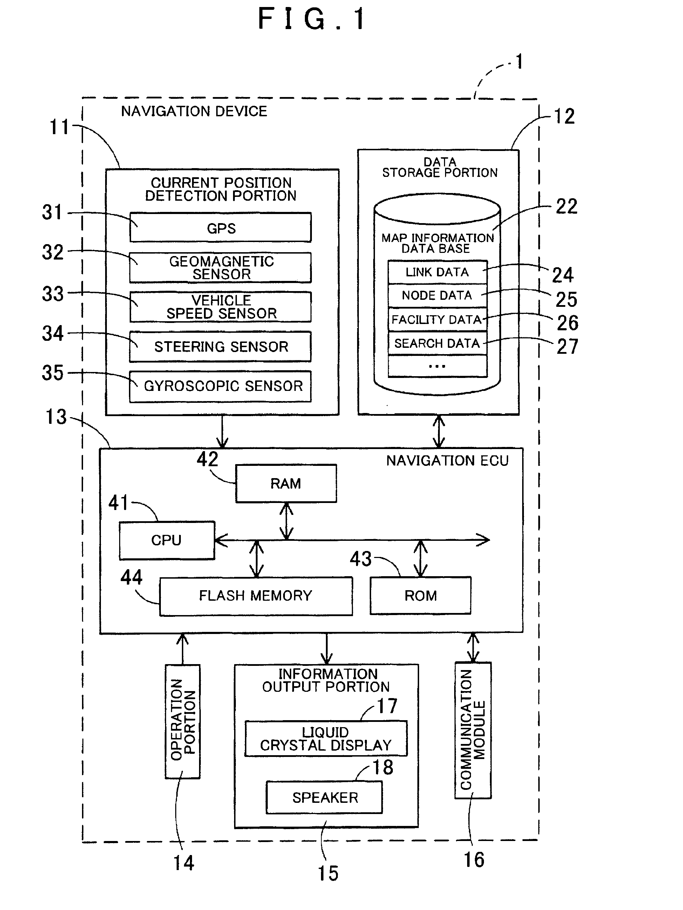

A specific embodiment of a navigation device according to the present invention will be explained in detail below with reference to the drawings. First, an overall configuration of a navigation device 1 according to the present embodiment will be explained using FIG. 1. FIG. 1 is a block diagram that shows the navigation device 1 according to the present embodiment.

As shown in FIG. 1, the navigation device 1 according to the present embodiment is configured from a current position detection portion 11, a data storage portion 12, a navigation electronic control unit (ECU) 13, an operation portion 14, an information output portion 15, and a communication module 16. The current position detection portion 11 detects the current position of the vehicle. The data storage portion 12 stores various types of data. The navigation ECU 13 (a reference position acquisition unit, an on-street parking zone search unit, a route search unit, an information acquisition unit, a selection unit, a specification unit, a basic route search unit) performs various types of computational processing based on information that is input. The operation portion 14 accepts an operation from an operator. The information output portion 15 outputs various types of information that pertain to map information, a guidance route, and on-street parking zones. The communication module 16 performs communication with information centers such as a traffic information center and the like.

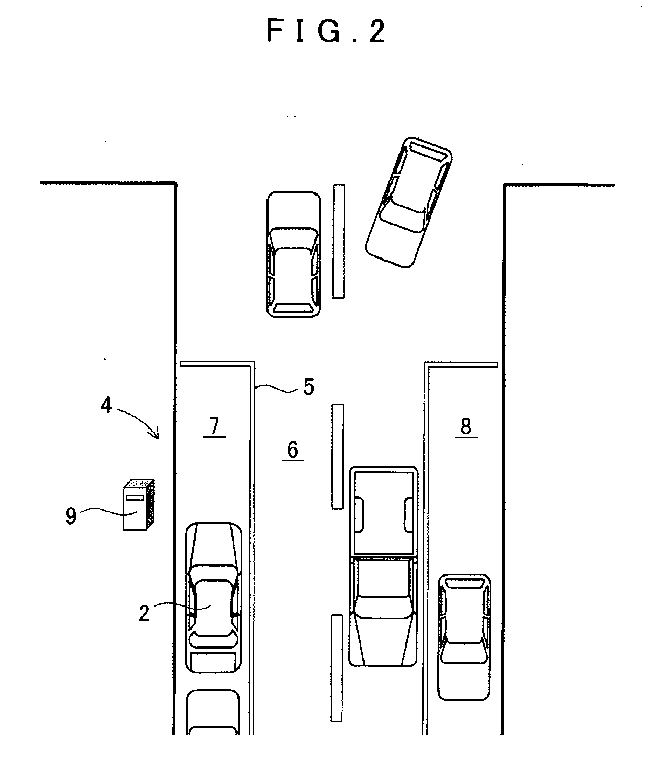

Next, on-street parking zones will be explained briefly using FIG. 2. On-street parking zones are parking zones that are provided on the street. FIG. 2 shows on-street parking zones 4 that are provided in roadside strips along both sides of a two-lane street. As shown in FIG. 2, the street where the on-street parking zones 4 are provided is divided by boundary lines 5, which are white lines or the like, into a two-lane driving area 6 in which the vehicle 2 travels and parking available spaces 7, 8. That is, the areas that are enclosed by the boundary lines 5 are the parking available spaces 7, 8 of the on-street parking zones 4. Note that in the on-street parking zones 4 shown in FIG. 2, the parking available spaces 7, 8 are respectively provided in the roadside strips on the left and right sides of the street, but a parking zone may also be provided in a roadside strip on only one side of the street. A parking meter 9 is installed near the parking available spaces 7, 8. A user of the on-street parking zones 4, after parking a vehicle 2 in one of the parking available spaces 7, 8, obtains a parking stub by inserting a specified amount of money into the parking meter 9. The user can park in the on-street parking zones 4 for a specified period of time by placing the obtained parking stub on the parked vehicle 2. Note that on-street parking zones are spaces where parking is allowed and formed on roads. The on-street parking zones are also called parking bays, parking zones, surface parking zones, street parking zones, road shoulder parking zones, and limited time parking zones, and the like.

With known technologies for the on-street parking zone described above, the problems described below have occurred. First, the on-street parking zone has the characteristic of being provided along the street. Therefore, in a search for a route to the on-street parking zone, unlike a search for a route to a parking site that is formed into a point and is provided in an off-street location, it is necessary to take into account the form of the link on which the on-street parking zone is provided, as well as the direction of travel on the link. Second, the parking regulations for the on-street parking zone are frequently more complex than for the off-street parking site. For example, the hours when parking is permitted, a use fee, what vehicles are eligible for parking, and the like are frequently determined in advance. Therefore, in a case where a traveler or the like wants to park in the on-street parking zone, it is difficult to determine whether or not it is possible to park in the on-street parking zone. It is also difficult to determine what on-street parking zone is appropriate for parking.

Each of the configuring elements of the navigation device 1 will be explained in order below. The current position detection portion 11 includes a GPS 31, a geomagnetic sensor 32, a vehicle speed sensor 33, a steering sensor 34, a gyroscopic sensor 35, an altimeter (not shown in the drawings), and the like, and is capable of detecting the vehicle's current position, heading, running speed, and the like. The vehicle speed sensor 33, in particular, is a sensor for detecting the vehicle's speed and distance traveled. The vehicle speed sensor 33 generates a pulse in response to the rotation of the vehicle's wheels and outputs a pulse signal to the navigation ECU 13. The navigation ECU 13 counts the generated pulses to compute the revolution speed of the wheels and the distance traveled. Note that it is not necessary for the navigation device 1 to be provided with all of the five types of sensors described above, and it is acceptable for the navigation device 1 to be provided with only one or a plurality among the five types of sensors.

The data storage portion 12 includes a hard disk (not shown in the drawings) as an external storage device and a storage medium, as well as a recording head (not shown in the drawings). The recording head serves as a driver for reading a map information data base 22, specified programs, and the like that are stored on the hard disk and for writing specified data to the hard disk.

The map information data base 22 stores various types of map data that are necessary for route guidance, traffic information guidance, and map displays. Specifically, the map data includes link data 24 that pertains to the forms of roads (links), node data 25 that pertains to node points, facility data 26 that pertains to facilities, search data 27 for searching for routes, intersection data that pertains to various intersections, search data for searching for geographical points, image drawing data for drawing images of maps, roads, traffic information, and the like on a liquid crystal display 17, and the like.

The link data 24 includes link lengths for each link that is included in a road, as well as data on the road to which each link belongs, such as the width, the slope, the cant, and the bank of the road, the state of the road surface, the number of lanes in the road, locations where the number of lanes decreases, locations where the road width narrows, crosswalks, and the like. The link data 24 also includes data that pertains to corners, such as the radii of curvature, intersections, T intersections, entrances to and exits from the corners, and the like. The link data 24 also includes data that pertain to road attributes, such as downhill roads, uphill roads, and the like. The link data 24 also includes data that pertain to road types, such as ordinary roads like national routes, prefectural routes, city streets, and the like, as well as toll roads like national expressways, urban expressways, ordinary toll roads, toll bridges, and the like. In addition, the link data 24 includes data that pertain to toll roads, such as data on roads (ramps) for toll road entrances and exits, toll plazas (interchanges), and the like.

The node data 25 includes data on branching points in actual roads (including intersections, T intersections, and the like), the coordinates (locations) of node points that are set at specified intervals according to the radii of curvature and the like of various roads, node attributes that indicate whether nodes correspond to intersections or the like, connecting link number lists that list the link numbers of the links that connect to the nodes, linked node number lists that list the node numbers of nodes that are linked to one another through links, data that pertain to the heights (elevations) of various node points, and the like.

The facility data 26 includes data that pertains to various types of facilities, such as hotels, hospitals, gas stations, parking locations, including on-street parking zones, tourist facilities, restaurants, service areas, and the like in various regions.

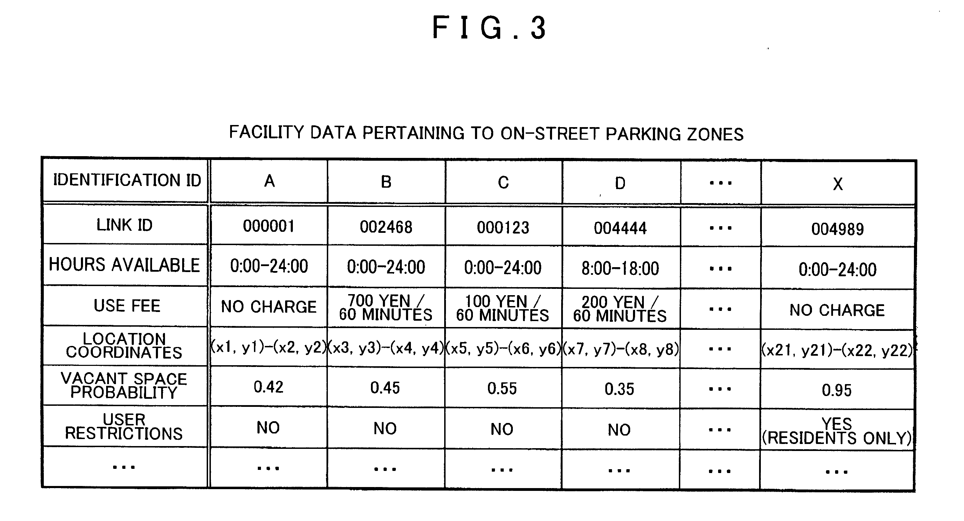

Next, the data within the facility data 26 that pertain to on-street parking zones in particular will be explained using FIG. 3. FIG. 3 is a figure that shows an example of the facility data that pertain to on-street parking zones and are stored in the map information data base 22.

As shown in FIG. 3, the facility data that pertain to an on-street parking zone include an identification ID that identifies the on-street parking zone, a link ID of the link on which the on-street parking zone is provided, an hours available that indicates the hours when the user can use the on-street parking zone, a use fee that is required when using the on-street parking zone, location coordinates that indicate the location of the on-street parking zone, a vacant space probability that indicates a predicted state of parking space availability, user restrictions that indicate restrictions on who can use the on-street parking zone, and the like. Note that for an on-street parking zone for which the use fee varies according to the time slot (for example, 9:00 to 12:00, 12:00 to 21:00), a use fee is stored for each time slot. Note also that the location coordinates that are stored include the coordinates of the point where the on-street parking zone starts and the coordinates of the point where the on-street parking zone ends. When the on-street parking zone is provided over the entire length of a link, the location coordinates are the coordinates of both ends of the link. The vacant space probability is a value that is computed based on past parking circumstances in the on-street parking zone and is equivalent to the ratio of vacant spaces to the total number of parking spaces in the on-street parking zone. Note that the current parking circumstances in the on-street parking zone may also be acquired from a center, and the vacant space probability may be computed based on the acquired current parking circumstances. Accumulated vacancy information for the parking spaces may also be stored for each day of the week and each time slot, and the vacant space probability may be computed and stored for each day of the week and each time slot, based on statistical results for the accumulated vacancy information. The user restrictions include various types of conditions such as "no restrictions", "residents only", "handicapped only", and the like.

For example, in the facility data shown in FIG. 3, the information that is stored for an on-street parking zone A indicates that the zone is located from (x1, y1) to (x2, y2) on a link with the link ID 000001, that the zone can be used at no charge from 0:00 to 24:00, with no user restrictions, and that the vacant space probability is 0.42. The information that is stored for an on-street parking zone B indicates that the zone is located from (x3, y3) to (x4, y4) on a link with the link ID 002468, that the zone can be used at a charge of 700 yen per 60 minutes from 0:00 to 24:00, with no user restrictions, and that the vacant space probability is 0.45. The same sort of information is also stored for the other on-street parking zones.

The search data 27 include data that are used to search for and display a route to a destination that has been set. Specifically, the search data 27 include cost data, route display data, and the like. The cost data are used to compute search costs and include data on the cost of passing through a node (hereinafter called the "node cost") and data on the cost of driving each link that is included in a road network (hereinafter called the "link cost"). The route display data are used to display a route that is selected by a route search on a map on the liquid crystal display 17.

The node cost is basically computed for a node that corresponds to an intersection, and its value is computed according to the vehicle's driving path when it passes through the intersection (that is, straight ahead, right turn, or left turn), the presence or absence of a traffic signal, the number of lanes, and the like.

The link cost, on the other hand, is computed for each link that is included in a road network, and its value is computed according to the length of the link, the presence or absence of an on-street parking zone (as well as the parking conditions and the like in a case where an on-street parking zone is present), the road attributes, the road type, the road width, the number of lanes, and the like.

A method of computing the link cost, particularly for a link that includes an on-street parking zone, will be explained below.

In a case where a search is performed for a route that leads to an on-street parking zone in the vicinity of a reference position (the current position, a set destination, or the like), the link cost for a link that is among the various links in the road network and that includes an on-street parking zone is computed using an ordinary cost factor and a parking cost factor. The ordinary cost factor is prescribed according to the road attributes, the road type, the road width, the number of lanes, and the like. The parking cost factor is computed based on information that pertains to the on-street parking zone. In other words, the link cost is computed by taking the basic link cost that is computed according to the link length and multiplying it by the ordinary cost factor and the parking cost factor. Note that the parking cost factor is computed by Equation 1 below.

Equation 1

$$\text{Parking cost factor} = \text{Use fee cost factor} \times \text{Distance cost factor} \times (1 - \text{Vacant space probability})$$

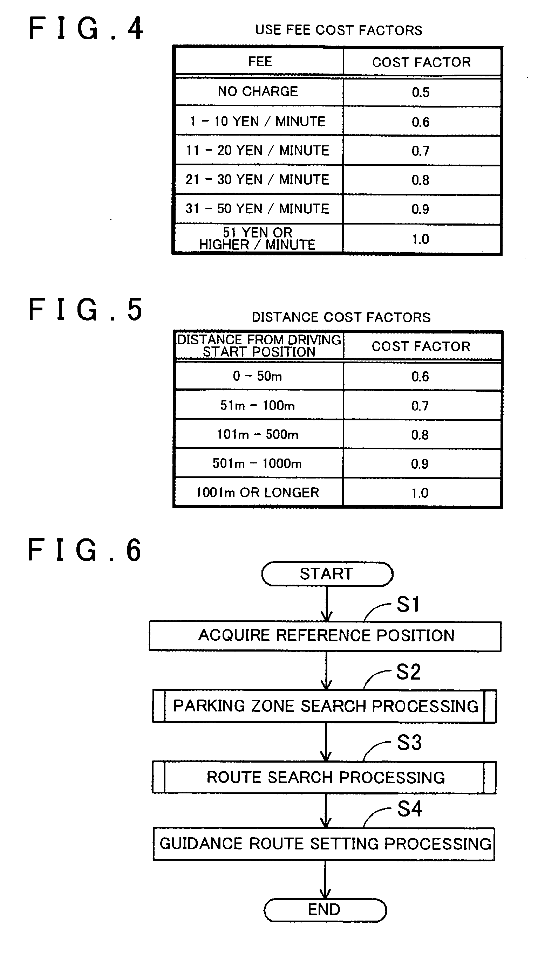

The use fee cost factor is determined based on the use fee that is required when using the on-street parking zone. FIG. 4 is a figure that shows a cost factor determination table that is based on use fees. Specifically, as shown in FIG. 4, if the use fee is "No charge", the cost factor is determined to be 0.5. If the use fee is 1 to 10 yen per minute, the cost factor is determined to be 0.6. If the use fee is 11 yen to 20 yen per minute, the cost factor is determined to be 0.7. If the use fee is 21 yen to 30 yen per minute, the cost factor is determined to be 0.8. If the use fee is 31 yen to 50 yen per minute, the cost factor is determined to be 0.9. If the use fee is 51 yen or higher per minute, the cost factor is determined to be 1.0.

The distance cost factor is determined based on the distance from the reference position from which the vehicle starts to drive to the on-street parking zone. FIG. 5 is a figure that shows a cost factor determination table that is based on the distance from the reference position. Specifically, as shown in FIG. 5, if the distance from the reference position is 0 meters to 50 meters, the cost factor is determined to be 0.6. If the distance from the reference position is 51 meters to 100 meters, the cost factor is determined to be 0.7. If the distance from the reference position is 101 meters to 500 meters, the cost factor is determined to be 0.8. If the distance from the reference position is 501 meters to 1000 meters, the cost factor is determined to be 0.9. If the distance from the reference position is 1001 meters or longer, the cost factor is determined to be 1.0.

Note that the distance from the reference position is computed based on the straight-line distance between the location coordinates of the reference position and the location coordinates of the on-street parking zone (refer to FIG. 3). The distance may also be computed as the distance that would be traveled if the links to the on-street parking zone were followed instead of as the straight-line distance.

The parking cost factor may also be computed using Equation 2 below.

Equation 2

$$\text{Parking cost factor} = \alpha \times C1 \times \beta \times C2 \times \gamma \times C3 \times \varepsilon \times C4$$

(where $\alpha$, $\beta$, $\gamma$, and $\varepsilon$ are adjustment factors)

In this case, C1 is a factor that is based on the distance from the reference position. To be specific, a number (1, 2, 3, ... n) is first assigned to each of the on-street parking zones that are located in the vicinity of the reference position (within a specified distance from the reference position, or within search blocks in the vicinity that include a search block where the reference position is located) in the order of their proximity to the reference position. Then for the i-th on-street parking zone, the factor $C1(i)$ is defined as $i/n$.

C2 is a factor that is based on the distance over which parking is possible, that is, on the length of the on-street parking zone. To be specific, an on-street parking zone length L is first computed for each of the on-street parking zones that are located in the vicinity of the reference position, and a minimum value $L_{min}$ is found. Note that the on-street parking zone length L is computed based on the shape of the link on which the on-street parking zone is provided and on the coordinates of the on-street parking zone (refer to FIG. 3). Then, if the length of the i-th on-street parking zone is defined as L(i), the factor C2(i) for the i-th on-street parking zone is defined as 1 / (L(i) / Lmin).

C3 is a factor that is based on the vacant space probability. To be specific, if the vacant space probability for the i-th on-street parking zone is defined as P(i), the factor C3(i) for the i-th on-street parking zone is defined as 1 - P(i).

C4 is a factor that is based on a continuousness of the on-street parking zone, that is, the number of a plurality of links over which the on-street parking zone stretches continuously. To be specific, in a case where an on-street parking zone is provided on a link that leads into the link on which the i-th on-street parking zone is provided, $C4_B(i)$ is defined as equal to KB (where KB is greater than zero and less than 1). On the other hand, in a case where an on-street parking zone is not provided on a link that leads into the link on which the i-th on-street parking zone is provided, $C4_B(i)$ is defined as 1. Furthermore, in a case where an on-street parking zone is provided on a link that leads out of the link on which the i-th on-street parking zone is provided, $C4_A(i)$ is defined as equal to KA (where KA is greater than zero and less than 1). On the other hand, in a case where an on-street parking zone is not provided on a link that leads out of the link on which the i-th on-street parking zone is provided, $C4_A(i)$ is defined as 1. The factor C4 for the i-th on-street parking zone is defined as $C4_B(i) \times C4_A(i)$.

The navigation device 1 according to the present embodiment is configured such that, in addition to searching for a route from a departure point to a destination, the navigation device 1 searches for a route that leads to a nearby on-street parking zone from the specified reference position (the current position, the set destination, or the like).

In the search for a route from the departure point to the destination, the navigation ECU 13 computes a total cost value that is the sum of the search costs (the node costs and the link costs) for each of all the routes from the departure point to the destination, as determined by the Dykstra method. The route that has the lowest total cost value is set as the guidance route.

By contrast, in the search for a route that leads to a nearby on-street parking zone from the reference position, the navigation ECU 13 first selects a specified number of the on-street parking zones that are in the vicinity of the reference position. The navigation ECU 13 then computes a total cost value that is the sum of the search costs (the node costs and the link costs) for each of all the routes that leads to all of the selected on-street parking zones, as determined by the Dykstra method. The route that has the lowest total cost value is set as the guidance route.

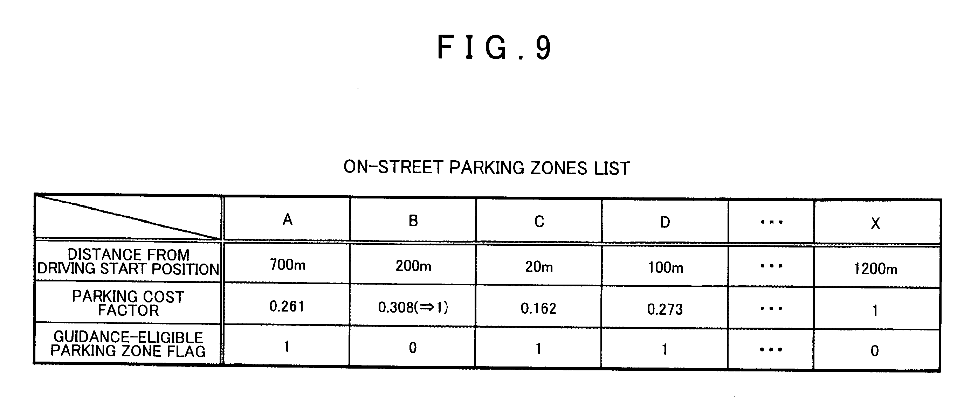

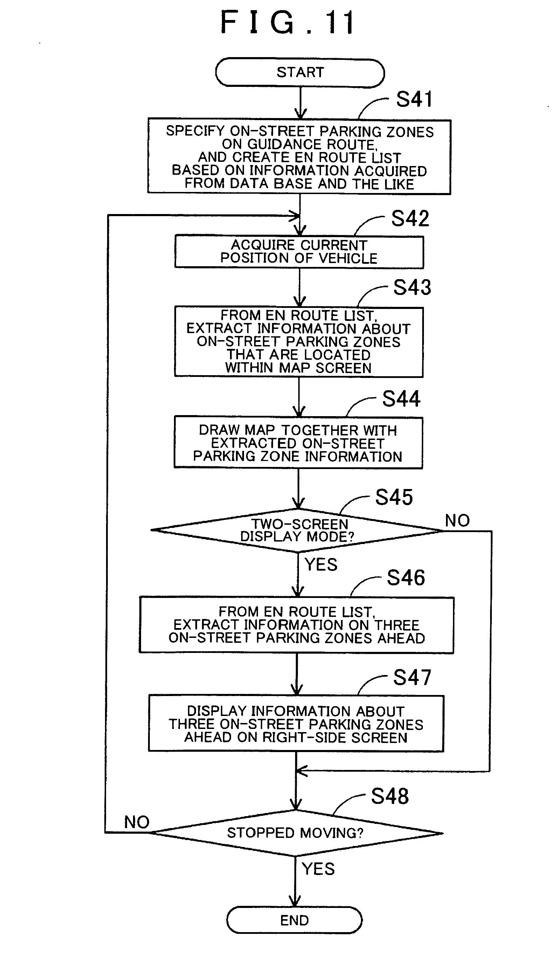

The navigation ECU 13 is an electronic control unit that performs overall control of the navigation device 1, including guidance route setting processing that sets the guidance route that leads to an on-street parking zone that is located in the vicinity of the reference position, driving guidance processing that provides guidance for driving in accordance with the set guidance route, and the like. The navigation ECU 13 includes a CPU 41, as well as a RAM 42, a ROM 43, and a flash memory 44 as internal storage devices. The CPU 41 serves as a computational device and a control device. The RAM 42 is used as a working memory for the various types of computational processing that the CPU 41 performs, and it also stores route data when a route has been found, an on-street parking zones list that will be described later (FIG. 9), and the like. The ROM 43 stores programs for controlling the various types of devices that are included in the navigation device 1. The flash memory 44 stores programs that are read from the ROM 43, a guidance route setting processing program (refer to FIG. 6), a driving guidance processing program (refer to FIG. 11), and the like.

The operation portion 14 is operated at times such as when the destination is input as a guidance end point and includes a plurality of operation switches (not shown in the drawing), such as various types of keys, buttons, and the like. Based on switch signals that are output by operating the various operation switches, such as by pressing or the like, the navigation ECU 13 controls the various types of corresponding operations that are executed. Note that the operation portion 14 can also be configured as a touch panel that is provided on the front surface of the liquid crystal display 17. In some cases, the operation portion 14 is also used to input a departure point as a guidance start point.

The information output portion 15 is configured from the liquid crystal display 17, a speaker 18, and the like, and outputs for the user various types of information that pertain to a map of the area around the vehicle, the guidance route, and the on-street parking zones.

The liquid crystal display 17 that is included in the information output portion 15 is provided in the center console or on the instrument panel surface in the vehicle's passenger cabin, and it displays a map image that includes a road, traffic information, operation guidance, an operation menu, guidance to the keys, the guidance route from the current position to the destination, guidance information along the guidance route, news, a weather forecast, the current time, e-mail, a television program, and the like. In addition, when the vehicle approaches an on-street parking zone, the liquid crystal display 17 displays information items that pertain to the on-street parking zone (the location of the on-street parking zone, the hours when the zone can be used, the use fee, the vacant space probability, the user restrictions, and the like).

The speaker 18 that is included in the information output portion 15 outputs traffic information guidance and voice guidance that guides driving along the guidance route, based on a command from the navigation ECU 13.

The communication module 16 is a communication device, such as a mobile telephone or a DCM, for example, that receives traffic information that is transmitted from a traffic information center, such as the Vehicle Information and Communication System (VICS (registered trademark)) center, a probe center, or the like, for example. The traffic information includes various types of information, such as congestion information, regulatory information, parking site information, traffic accident information, and the like.

The navigation device 1 may also include a DVD drive. The DVD drive is a drive that is capable of reading data that is recorded in a recording medium such as a DVD, a CD, or the like. The map information data base 22 is updated and the like based on the data that is read.

Next, the guidance route setting processing program that is executed by the CPU 41 in the navigation device 1 that has the configuration described above will be explained based on FIG. 6. FIG. 6 is a flowchart of the guidance route setting processing program according to the present embodiment. The guidance route setting processing program is executed when a specified operation is performed by the user, and it is a program that searches for routes that lead to an on-street parking zone that is located in the vicinity of the reference position and sets the guidance route. Note that the programs that are shown in the flowcharts in FIGS. 6 to 8 are stored in the RAM 42 and the ROM 43 that are provided in the navigation device 1 and are executed by the CPU 41.

In the guidance route setting processing program, first, at step (hereinafter abbreviated as "S") 1, the CPU 41 acquires the reference position from which to start driving to the on-street parking zones. Note that any geographical point can be used as the reference position, such as the current position of the vehicle, the destination that the user has set, the on-street parking zone that is closest to the destination that the user has set, or the like. However, as an example, a case will be explained below in which the destination that the user has set is used as the reference position. Therefore, at S1, the navigation device 1 performs processing to acquire the currently set destination. Note that the processing at S 1 is equivalent to processing by a reference position acquisition unit.

Note that processing may be added after S 1 that allows the user to select an on-street parking zone for which he wants guidance. For example, the processing may be configured such that it displays a list of the on-street parking zones in the vicinity of the reference position on the liquid crystal display 17 and allows the user to select an on-street parking zone.

The processing may also allow the user to select, in advance, conditions for an on-street parking zone for which the user wants guidance. For example, the processing may be configured such that it displays a plurality of conditions on the liquid crystal display 17, such as "for fee", "no charge", "either for fee or no charge is OK", and the like, and allows the user to select one.

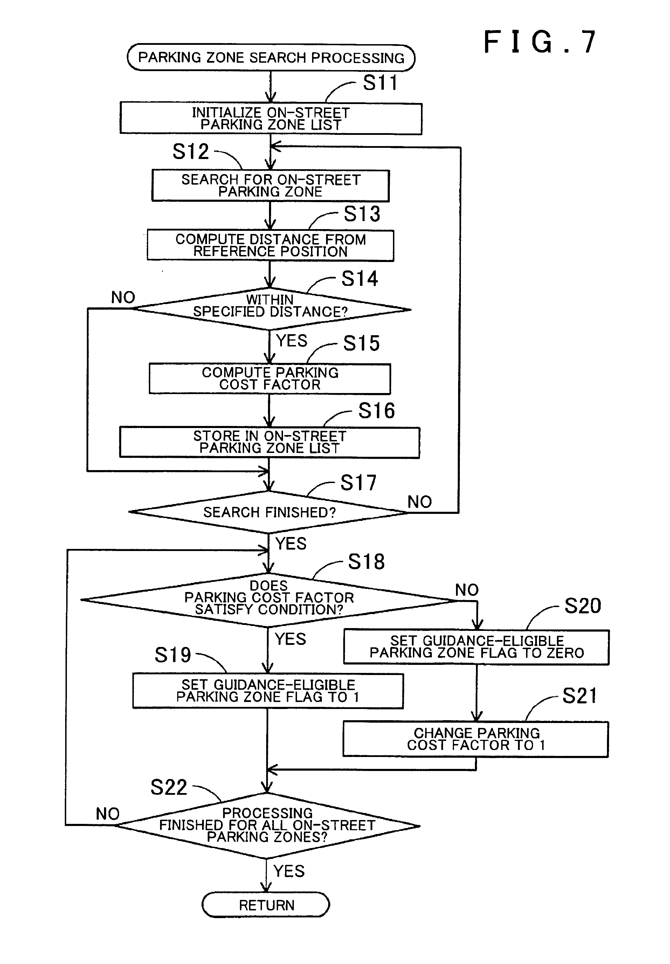

Next, at S2, the CPU 41 executes parking zone search processing (FIG. 7) that will be described later. Note that the parking zone search processing is processing that searches for an on-street parking zone (refer to FIG. 2) that is in the vicinity of the destination that was acquired at S1, then determines whether or not the on-street parking zone is suitable for parking.

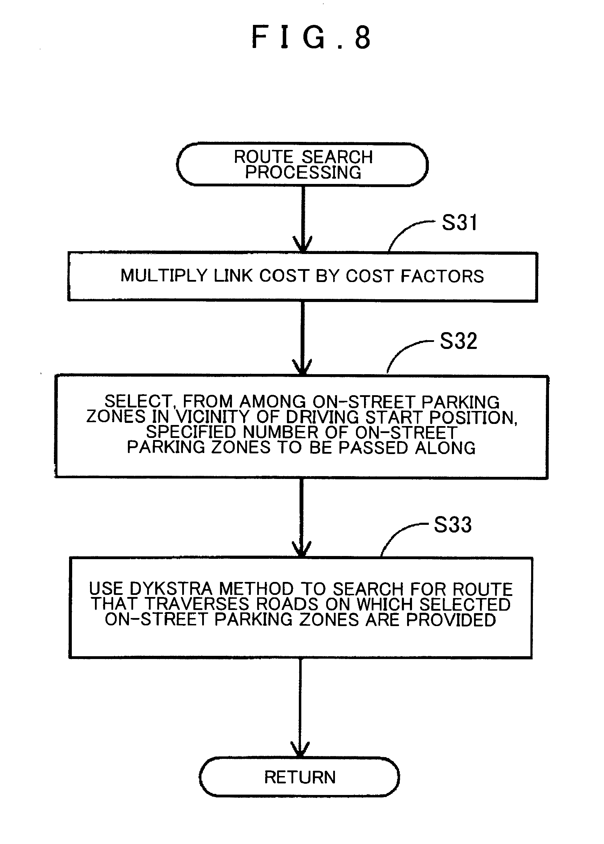

Next, at S3, the CPU 41 executes route search processing (FIG. 8) that will be described later. Note that the route search processing is processing that uses the Dykstra method to search for routes that start from the destination and lead to on-street parking zones that are suitable for parking, then computes the total cost value for each route.

Next, at S4, the CPU 41 specifies the route that has the lowest total cost value, based on the results of the route search processing at S3, and sets that route as the guidance route. Note that the processing may also display on the liquid crystal display 17, as guidance route candidates, a plurality of the routes for which the total cost value is low, then set the route that is selected by the user to be the guidance route.

Next, sub-processing for the parking zone search processing at S2 will be explained based on FIG. 7. FIG. 7 is a flowchart of a sub-processing program for the parking zone search processing.

First, at S11, the CPU 41 initializes the on-street parking zones list that is stored in the RAM 42. Note that the on-street parking zones list, as shown in FIG. 9, is a storage area where various types of information about the on-street parking zones that are stored in the facility data 26 of the map information data base 22 are stored for use in the route search.

Next, at S12, the CPU 41 searches for an on-street parking zone based on the facility data 26 of the map information data base 22 and acquires information that pertains to the on-street parking zone that will be the object of the processing at S13 to S 15 below.

Next, at S 13, the CPU 41 computes the straight-line distance from the destination to the on-street parking zone based on the location coordinates of the destination and the location coordinates of the on-street parking zone that were acquired at S12. Note that the distance may also be computed as a distance that follows the shapes of the links instead of as the straight-line distance. The processing may also compute the arrival time at (the distance to) the destination if the user parks in the on-street parking space and walks to the destination. The processing may also be configured such that driving guidance is provided by the driving guidance processing program (FIG. 11), which is described later.

Next, at S 14, the CPU 41 determines whether or not the distance from the destination to the on-street parking zone that was computed at S 13 is within a specified distance (for example, two kilometers). In a case where it is determined that the distance from the destination to the on-street parking zone is within the specified distance (YES at S 14), the processing proceeds to S 15. On the other hand, in a case where it is determined that the distance from the destination to the on-street parking zone is not within the specified distance (NO at S 14), it is determined that the on-street parking zone does not meet the specified conditions for the current route search, and the processing proceeds to S 17. Note that processing that determines whether or not the on-street parking zone is within search blocks in the vicinity that include a search block where the destination is located may also be executed instead of the processing at S14.

At S 15, the CPU 41 computes the parking cost factor for the on-street parking zone. Note that the parking cost factor is computed by Equation 1 based on (A) the distance from the destination to the on-street parking zone that was computed at S 13, (B) the use fee for the on-street parking zone, and (C) the vacant space probability. The parking cost factor may also be computed by Equation 2 based on (A) the distance from the destination to the on-street parking zone that was computed at S 13, (B) the distance over which parking is possible in the on-street parking zone, (C) the vacant space probability, and (D) the continuousness of the on-street parking zone.

Next, at S16, the CPU 41 stores in the on-street parking zones list the distance from the destination to the on-street parking zone that was computed at S 13 and the parking cost factor for the on-street parking zone that was computed at S 15 (refer to FIG. 9). Note that a value of 1 is stored as the parking cost factor for an on-street parking zone for which it was determined that the distance from the destination to the on-street parking zone is greater than a specified distance. Furthermore, even if the distance from the destination to the on-street parking zone is within the specified distance, a value of 1 is stored as the parking cost factor for an on-street parking zone that has user restrictions and an on-street parking zone for which the predicted arrival time is outside of the hours when the zone can be used. For example, in FIG. 9, the on-street parking zone X has user restrictions, so a value of 1 is stored as the parking cost factor.

Next, at S 17, the CPU 41 determines whether or not the search has been completed for all of the on-street parking zones that are stored in the facility data 26 and whether or not the processing from S 13 to S16 has been completed for all of the on-street parking zones that were found.

If the result of the determination is that the search has been completed for all of the on-street parking zones that are stored in the facility data 26 and that the processing from S 13 to S16 has been completed for all of the on-street parking zones that were found (YES at S 17), the processing proceeds to S 18. On the other hand, if it is determined that the search has not been completed for all of the on-street parking zones that are stored in the facility data 26 or that the processing from S 13 to S16 has not been completed for all of the on-street parking zones that were found (NO at S 17), the processing returns to S12 and searches for the next on-street parking zone to serve as the object of the processing. Note that the processing from S12 to S16 is equivalent to processing by an on-street parking zone search unit.

At S 18, the CPU 41 refers to the parking cost factor for one of the on-street parking zones that are stored in the on-street parking zones list and determines whether or not the parking cost factor satisfies a specified condition. In this case, the specified condition is that the parking cost factor is not greater than a specified value (for example, 0.3). Note that the specified condition may also be that the parking cost factor is of at least a specified rank among all of the parking cost factors ranked from lowest to highest, that the distance from the destination is of at least a specified rank among all of the distances ranked from shortest to longest, that the vacant space probability is of at least a specified rank among all of the vacant space probabilities ranked from highest to lowest, or that there are no user restrictions (refer to FIG. 3).

In a case where it is determined that the parking cost factor satisfies the specified condition (YES at S 18), it is determined that the on-street parking zone is an on-street parking zone that satisfies the specified condition for the current route search (hereinafter called a "condition-satisfying on-street parking zone"), and a guidance-eligible parking zone flag for the on-street parking zone is set to 1 (S 19). The processing then proceeds to S22.

On the other hand, in a case where it is determined that the parking cost factor does not satisfy the specified condition (NO at S 18), it is determined that the on-street parking zone is an on-street parking zone that does not satisfy the specified condition for the current route search, and the guidance-eligible parking zone flag for the on-street parking zone is set to zero (S20). Then the parking cost factor for the on-street parking zone is changed to 1, and the on-street parking zones list is updated (S21). This causes the link where the on-street parking zone is located whose parking cost factor does not satisfy the specified condition to be treated in the same manner as a link that does not have an on-street parking zone for the purpose of computing the link cost.

For example, in FIG. 9, an on-street parking zone B has a parking cost factor that is greater than 0.3 and does not satisfy the specified condition, so the parking cost factor is changed to 1. Note that the processing from S18 to S21 is equivalent to processing by a parking zone specification unit.

Next, at S22, the CPU 41 determines whether or not the processing from S 18 to S21 has been completed for all of the on-street parking zones that are stored in the on-street parking zones list. In a case where it is determined that the processing from S18 to S21 has not been completed for all of the on-street parking zones (NO at S22), the processing returns to S 18, and the processing from S 18 onward is executed for a new on-street parking zone. On the other hand, in a case where it is determined that the processing from S 18 to S21 has been completed for all of the on-street parking zones (YES at S22), the parking zone search processing is terminated, and the processing proceeds to S5. Note that the processing from S12 to S22 is equivalent to processing by an information acquisition unit.

Next, sub-processing for the route search processing at S3 will be explained based on FIG. 8. FIG. 8 is a flowchart of a sub-processing program for the route search processing.

First, at S31, the CPU 41 computes the link cost in the direction that leads away from the destination for each of the links that is subject to the route search. The CPU 41 computes the link cost by taking the specified link cost that is based on the link length and multiplying it by each of the cost factors. Note that for a link that does not include an on-street parking zone, the cost factor that is used as a multiplier at S31 is the ordinary cost factor that is prescribed according to the road attributes, the road type, the road width, the number of lanes, and the like. For a link that does include an on-street parking zone, the specified link cost is multiplied by the ordinary cost factor, as well as by the parking cost factor that is computed by the parking zone search processing (FIG. 7).

Note that in the present embodiment, the link cost is multiplied by the parking cost factor without modification, but in a case where the link cost thus computed is too low, the parking cost factor may also be multiplied by either an across-the-board correction factor or individual correction factors for each variable that is used to compute the parking cost factor. This makes it possible to adjust the link cost such that the route search is performed more appropriately.

Thus, for a link that includes a condition-satisfying on-street parking zone, that is, for a link that includes an on-street parking zone whose parking cost factor satisfies the specified condition at S 18 (for example, not greater than 0.3) and for which the guidance-eligible parking zone flag is set to 1, the link cost that is computed is lower than the link costs of other links. Therefore, when the search is conducted at S32 and S33 for a route to the destination, which is described later, there is a strong possibility that a guidance route will be set that includes the link.

Next, at S32, from among the on-street parking zones that are located in the vicinity of the destination, the CPU 41 selects a specified number of the on-street parking zones (for example, three zones) as candidates to be passed along the route. Note that the link costs that were computed at S31 are referenced as the standard for selecting the on-street parking zones to be passed along the route, and of the links that are provided with the on-street parking zones that satisfy the specified condition for the current search, the three links with the lowest link costs are selected and are ranked such that the link with the lowest link cost is ranked the highest. Note that selection standard may also be that the parking cost factor is of at least a specified rank (for example, in the top three) among all of the parking cost factors ranked from lowest to highest, that the distance from the destination is of at least a specified rank among all of the distances ranked from shortest to longest, that the vacant space probability is of at least a specified rank among all of the vacant space probabilities ranked from highest to lowest, or that the continuousness of the on-street parking zone is of at least a specified rank among all of the on-street parking zones ranked from highest to lowest. Note that the processing at S32 is equivalent to processing by a selection unit.

Next, at S33, the CPU 41; using the link costs that were computed at S31, searches for a route that leads from the reference position (the set destination or the current position) to the specified number of the on-street parking zones that were selected at S32, that is, a route that runs along the roads having the selected on-street parking zones.

Note that in searching for the route that leads to the on-street parking zones, the navigation ECU 13 computes the total cost value that is the sum of the search costs (the node costs and the link costs) for each of all the routes, as determined by the Dykstra method, that starts from the set destination and runs along the roads having the on-street parking zones that were selected at S32. Note that the route searching by the Dykstra method is a known technology, so the explanation of it will be omitted.

Next, the CPU 41, referring to the results of the route searching at S33, sets as the guidance route (S4) the route that has the lowest total cost value and that first passes by the on-street parking zone that has the lowest parking cost factor. Note that it is acceptable for the route that has the lowest total cost value to be set as the guidance route, regardless of the order in which it passes the on-street parking zones. It is also acceptable for the route that has the shortest total driving distance to be set as the guidance route, even if it is not the route that has the lowest total cost value. It is also acceptable to set as the guidance route the route that first passes by the on-street parking zone that has the longest distance over which parking is possible, the route that first passes by the on-street parking zone that has the highest vacant space probability, and the route that first passes by the on-street parking zone that has continuousness and is the closest to the reference position. Moreover, a plurality of route candidates may be displayed on the liquid crystal display 17, and the route that is then selected by the user may be set as the guidance route. Note that the processing at S33 is equivalent to processing by a route search unit.

Furthermore, the CPU 41 may also be configured such that, in a case where the current position of the vehicle is not on the guidance route that is set at S4, the CPU 41 (as a specification unit) specifies, from among the on-street parking zones that are located on the set guidance route, an on-street parking zone that is located on the first road along the guidance route that the vehicle will travel along, starting from the current position of the vehicle. The CPU 41 (as a basic route search unit) then searches anew for a route from the current position of the vehicle to the specified on-street parking zone. The CPU 41 then corrects the previously set guidance route by adding the newly found route to it. Thus, even in a case where the vehicle is not located on the guidance route, it is possible to provide guidance for a route that starts from the current position and leads to (passes by) a plurality of the on-street parking zones that are located in the vicinity of the reference position.

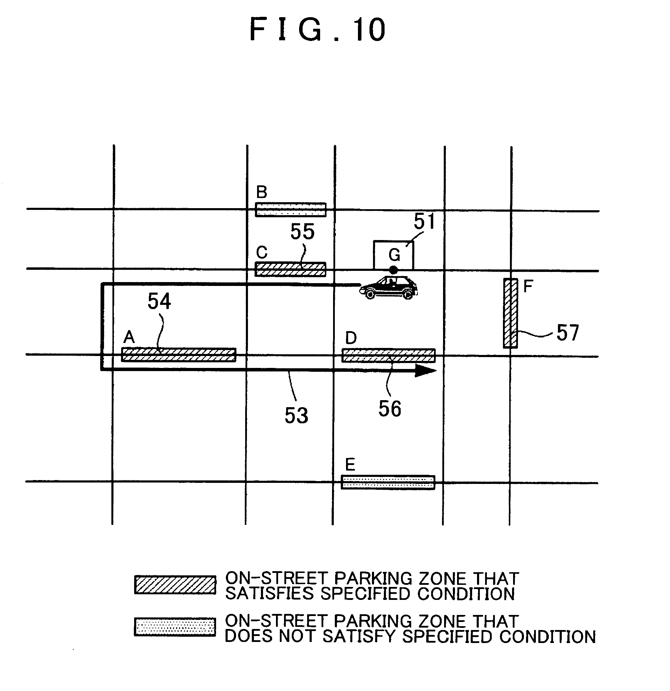

FIG. 10 is an example of a guidance route that is set in a case where a search is performed for a route that leads to the on-street parking zones in the area that surrounds a destination 51 that is set in the navigation device 1 and that serves as the reference position.

In the area surrounding the destination 51 that is shown in FIG. 10, on-street parking zones A to F are provided in six locations. Furthermore, of the on-street parking zones A to F, the on-street parking zones A, C, D, and F are on-street parking zones that satisfy the specified condition for the route search. Therefore, the link costs that are computed in accordance with the parking cost factors are lower for a link 54 on which the on-street parking zone A is located, a link 55 on which the on-street parking zone C is located, a link 56 on which the on-street parking zone D is located, and a link 57 on which the on-street parking zone F is located than for the other links. Of the on-street parking zones that satisfy the specified condition for the route search, the on-street parking zones A, C, and D are the specific on-street parking zones that are selected at S32 as candidates to be passed along the route.

In a case like that shown in FIG. 10, where a route that runs along the link 54, the link 55, and the link 56 is set as a guidance route 53, the guidance route 53 becomes a route that leads to the on-street parking zone A, the on-street parking zone C, and the on-street parking zone D. Therefore, when the user, after arriving at the destination, wants to park in an on-street parking zone that is located in the vicinity of the destination, the user can follow the guidance route 53 to drive efficiently to the on-street parking zone A, the on-street parking zone C, and the on-street parking zone D, which are the on-street parking zones that are suitable for parking. The user can then check the availability of spaces in each of the on-street parking zones and park when he finds a vacant space.

Next, the driving guidance processing program, which is executed by the CPU 41 in the navigation device 1, will be explained based on FIG. 11. FIG. 11 is a flowchart of the driving guidance processing program according to the present embodiment. The driving guidance processing program is a program that guides driving to the on-street parking zones according to the guidance route that was set by the guidance route setting processing program (FIGS. 6 to 8). Note that the program that is shown in the flowchart in FIG. 11 is stored in one of the RAM 42 or the ROM 43 that are provided in the navigation device 1 and is executed by the CPU 41.

First, at S41 in the driving guidance processing program, the CPU 41 specifies all of the on-street parking zones that are located on the guidance route that was set by the guidance route setting processing program (FIGS. 6 to 8). The CPU 41 also acquires information that pertains to each of the specified on-street parking zones from the facility data 26 that is stored in the map information data base 22 (refer to FIG. 3) and from the on-street parking zones list (FIG. 9). The CPU 41 also creates an en route list based on the acquired information.

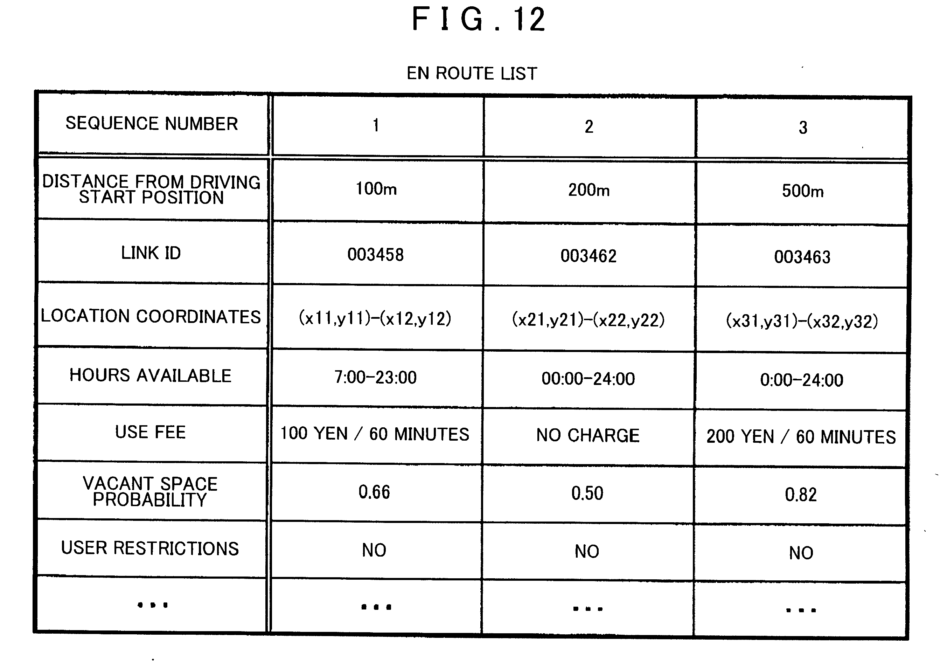

FIG. 12 is a figure that shows an example of the en route list that is created at S41. The en route list in FIG. 12 is created in a case where a guidance route is set that passes by three on-street parking zones.

As shown in FIG. 12, the information pertaining to each of the on-street parking zones that is stored in the en route list includes a sequence number that indicates the order in which the vehicle passes by the on-street parking zone when driving along the guidance route, a distance from the driving start position, location coordinates that indicate the location of the on-street parking zone, an hours available that indicates the hours when the user can use the on-street parking zone, a use fee that is required when using the on-street parking zone, a vacant space probability that indicates a predicted state of parking space availability, user restrictions that indicate restrictions on who can use the on-street parking zone, and the like.

Next, at S42, the CPU 41 acquires the current position of the vehicle. Specifically, the current position of the vehicle is first detected by the GPS 31, and map matching processing is then performed that specifies the current position of the vehicle on a map, based on map information that is stored in the map information data base 22.

Next, at S43, the CPU 41 specifies the on-street parking zones that are located within a map screen that is displayed on the liquid crystal display 17, based on the current position of the vehicle that was acquired at S42, the reduction scale setting of the map that is displayed on the liquid crystal display 17, and the en route list that was created at S41. Then the CPU 41 extracts from the en route list the information that pertains to the specified on-street parking zones.

Next, at S44, the CPU 41 draws a map image of the area surrounding the current position on the liquid crystal display 17, together with the information pertaining to the on-street parking zones that was extracted at S43. Thus a driving guidance screen that guides the driver's driving along the guidance route is displayed on the liquid crystal display 17.

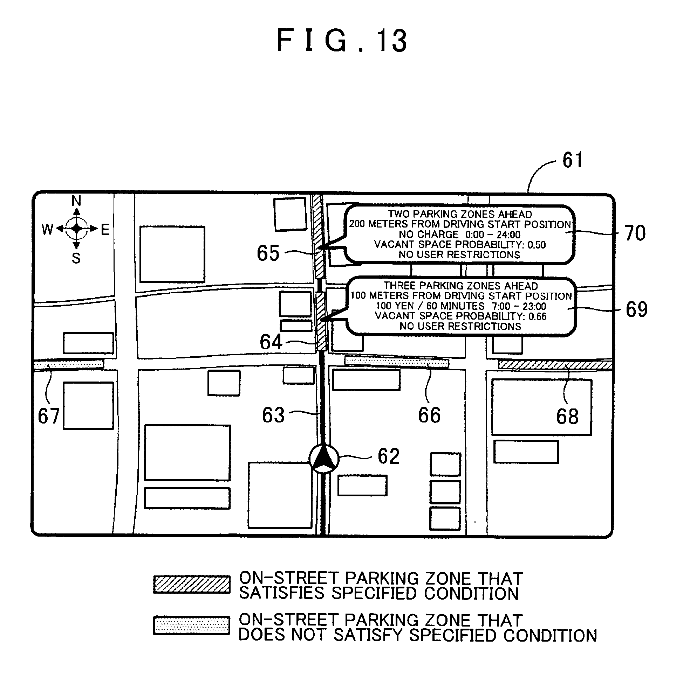

FIG. 13 is a figure that shows a driving guidance screen 61 that is displayed on the liquid crystal display 17 in the navigation device 1 according to the present embodiment.

As shown in FIG. 13, the driving guidance screen 61 includes a vehicle position mark 62 that indicates the current position of the vehicle, a driving guidance route line 63 that is drawn along the guidance route on the map image, parking marks 64 to 68 that indicate the locations of on-street parking zones, and information windows 69, 70 that show information that pertains to the on-street parking zones.

Further, of the parking marks 64 to 68, those that correspond to the on-street parking zones that satisfy the specified condition of the current route search, as determined by the guidance route setting processing program (FIGS. 6 to 8), are highlighted in red. In contrast, the parking marks that correspond to the other on-street parking zones (that is, the on-street parking zones that it has been determined do not satisfy the specified condition) are displayed in blue. Note that the on-street parking zones for which the guidance-eligible parking zone flags are set to 1 are displayed as parking zones that satisfy the specified condition, and the on-street parking zones for which the guidance-eligible parking zone flags are set to zero are displayed as parking zones that do not satisfy the specified condition.

The information windows 69, 70 display, in the form of text, information that pertains particularly to those of the on-street parking zones displayed on the map that are located on the guidance route. Note that the content that is displayed includes information that indicates how many of the on-street parking zones lie ahead on the guidance route, information that pertains to the distance from the reference position, information that pertains to the use fee, information that pertains to the hours when the on-street parking zone can be used, information that pertains to the vacant space probability, and information that pertains to the user restrictions.

In addition to the information described above, guidance may also be provided on the straight-line distance from the reference position and on the arrival time at (the distance to) the reference position in the event that the user parks in the on-street parking space and walks to the reference position.

The current time may also be acquired by the GPS 31, and guidance may be provided on the vacant space probability that corresponds to the current time and on the use fee that corresponds to the current time. Guidance that corresponds to the current time may also be provided for an on-street parking zone for which the parking conditions will change, based on information about the on-street parking zone. For example, guidance may be provided that says, "In another ten minutes, you can park in this parking zone at no charge."

Therefore, by referring to the driving guidance screen 61 that is displayed on the liquid crystal display 17, the user can obtain various types of information pertaining to the on-street parking zones that are located on the guidance route. In particular, based on the displayed locations and lengths of the parking marks 64 to 68, it is possible for the user to know the links where the on-street parking zones are provided, as well as the lengths of the on-street parking zones (that is, the distance over which parking is possible in each of the on-street parking zones). Moreover, by referring to the displayed colors of the parking marks 64 to 68, the user can easily understand whether or not a given on-street parking zone is an on-street parking zone that satisfies the specified condition.

Next, at S45, the CPU 41 determines whether or not the navigation device 1 is set to a two-screen display mode. In a case where it is determined that the two-screen display mode is set (YES at S45), the processing proceeds to S46. On the other hand, in a case where it is determined that an ordinary display mode is set (NO at S45), the processing proceeds to S48.

At S46, the CPU 41 extracts from the en route list information that pertains to the next three on-street parking zones that the vehicle will pass along the guidance route. Then, at S47, the CPU 41 displays the information that it extracted at S46 in the form of a list on a right-side screen on the liquid crystal display 17.

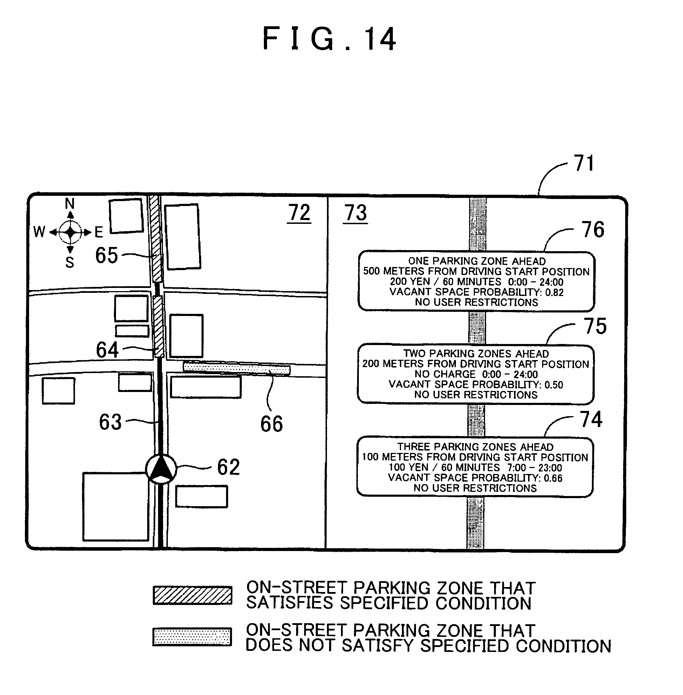

FIG. 14 is a figure that shows a driving guidance screen 71 that is displayed in the two-screen display mode on the liquid crystal display 17 in the navigation device 1 according to the present embodiment.

As shown in FIG. 14, the driving guidance screen 71 includes two display areas. One of the display areas is a left screen 72 that displays the map image of the area surrounding the vehicle, and the other display area is a right screen 73 that displays information that pertains to the next three on-street parking zones that the vehicle will pass. Note that, except for the fact that the information windows 69, 70 are not displayed on the left screen 72, the left screen 72 is identical to the driving guidance screen 61 (FIG. 13) that has already been explained, so an explanation of the left screen 72 will be omitted.

The right screen 73 is provided with three information display spaces 74 to 76. Each of the information display spaces 74 to 76 displays, in the form of text, information that pertains particularly to one of the next three on-street parking zones that the vehicle will pass, among all of the on-street parking zones that are located on the guidance route. Note that the information display space 74, which is positioned at the lowest level, displays information that pertains to the on-street parking zone that is located closest to the current vehicle position along the guidance route. Note also that the information display space 75, which is positioned at the middle level, displays information that pertains to the on-street parking zone that is located in the second closest position to the current vehicle position along the guidance route. The information display space 76, which is positioned at the highest level, displays information that pertains to the on-street parking zone that is located in the third closest position to the current vehicle position along the guidance route. Note that the content that is displayed in the information display spaces 74 to 76 is of the same sort as the content that is displayed in the information windows 69, 70 that are shown in FIG. 13.

Therefore, by referring to the driving guidance screen 71 that is displayed on the liquid crystal display 17, the user can more easily obtain various types of information pertaining to the on-street parking zones that are located on the guidance route.

Next, at S48, the CPU 41 determines whether or not the vehicle has stopped moving. Note that a case in which the vehicle has stopped moving may be equivalent, for example, to a case in which the vehicle has stopped at the same point for at least a specified period of time, to a case in which the ignition switch has been turned off, or the like. In a case where it is determined that the vehicle has stopped moving (YES at S48), the driving guidance processing program terminates. On the other hand, in a case where it is determined that the vehicle has not stopped moving (NO at S48), the processing returns to S42, and the driving guidance continues to be provided.

As explained in detail above, according to the present embodiment, when the vehicle will be parked in an on-street parking zone in the vicinity of the reference position, it is possible for the navigation device 1, the route search method used by the navigation device 1, and the computer programs that are executed by the navigation device 1 to find a route that runs along a road having an on-street parking zone that is a suitable candidate for parking. This is possible because, in a case where the user wants to park in an on-street parking zone in the vicinity of the reference position, the search is conducted for the on-street parking zones that are located in the vicinity of the reference position (S12), the parking cost factor is computed for each of the on-street parking zones that are found, based on various types of information pertaining to the on-street parking zone (S 15), some of the on-street parking zones that are located in the vicinity of the reference position are selected as the on-street parking zone candidates to be passed along the route, based on the computed parking cost factor (S32), and the search is conducted for a route that runs along the roads having the selected on-street parking zones (S33). It is therefore possible to allow the user to park quickly in a suitable on-street parking zone, even in a case where the user is a traveler or the like who is not familiar with the streets.

Furthermore, because the on-street parking zones that serve as candidates are selected based on the various types of information pertaining to the on-street parking zones, it is possible to identify, among a large number of the on-street parking zones, the on-street parking zones that are suitable places for the user to park and to find a route by giving priority to the roads on which the identified on-street parking zones are provided. It is therefore possible to provide appropriate guidance to the on-street parking zones that the user can use and that are highly convenient, even if there are numerous on-street parking zones for which complicated parking conditions have been established.

Using the information that pertains to the hours that an on-street parking zone is available, the use fee, the distance from the destination to the on-street parking zone, the distance over which parking is possible, the continuousness of the on-street parking zone, the vacant space probability, and the user restrictions makes it possible to identify, among a large number of the on-street parking zones, the on-street parking zones that are suitable places for the user to park and to treat those on-street parking zones as candidates to be passed along the route.

In addition, the shorter the distance is to the destination from an on-street parking zone, the lower the link cost is for the link on which the on-street parking zone is provided and the easier it is for the on-street parking zone to be selected as a candidate for the route. Therefore, priority can be given to including in the guidance route the on-street parking zones that are close to the destination. This makes it possible for the user to park in an on-street parking zone that is closer to the destination.

Further, the lower the use fee is for an on-street parking zone, the lower the link cost is for the link on which the on-street parking zone is provided and the easier it is for the on-street parking zone to be selected as a candidate for the route. Therefore, priority can be given to including in the guidance route the on-street parking zones that have low use fees. This makes it possible for the user to park in an on-street parking zone that has a lower use fee.

Moreover, the longer the distance is over which parking is possible in an on-street parking zone, the lower the link cost is for the link on which the on-street parking zone is provided and the easier it is for the on-street parking zone to be selected as a candidate for the route. Therefore, priority can be given to including in the guidance route the on-street parking zones that have long distances over which parking is possible. This makes it possible to guide the user to an on-street parking zone in which it is more likely that the user will be able to park.

In a case where an on-street parking zone is provided that extends over two or more connected links, the link cost is lower for each of the connected links, and it is easier for the on-street parking zone to be selected as a candidate for the route. Therefore, priority can be given to including in the guidance route the on-street parking zones that are located such that they extend continuously over a plurality of links. This makes it possible to guide the user to an on-street parking zone in which it is more likely that the user will be able to park.

Furthermore, the higher the vacant space probability is for an on-street parking zone, the lower the link cost is for the link on which the on-street parking zone is provided and the easier it is for the on-street parking zone to be selected as a candidate for the route. Therefore, priority can be given to including in the guidance route the on-street parking zones that have high vacant space probabilities. This makes it possible to guide the user to an on-street parking zone in which it is more likely that the user will be able to park.

Moreover, because the on-street parking zones that satisfy the specified condition for the current route search are specified based on various types of information pertaining to the on-street parking zones (S 18 to S21), and because the search is conducted for a route that passes by the specified on-street parking zones, it is possible to find a route that leads to an on-street parking zone that is a suitable place for the user to park.

It should be understood by those skilled in the art that the present invention is not limited by the embodiment described above and that various improvements and modifications may occur insofar as they are within the scope of the present invention.

For example, in the present embodiment, the search is conducted for routes that lead to all of the on-street parking zones that are located in the vicinity of the reference position (for example, within a two-kilometer radius of the reference position), regardless of whether the on-street parking zones have use fees or not. However, the search may also be conducted such that it finds only routes that lead to the on-street parking zones that do not have use fees.

Further, the present embodiment is configured such that the on-street parking zone candidates to be passed along the route are first selected based on the link costs of the links on which the on-street parking zones are provided (S32), and then the search is conducted for the routes that lead to the selected on-street parking zones. However, the on-street parking zone candidates to be passed along the route may also be selected after the route search is conducted.

The present invention may also be configured such that the parking cost factor can be adjusted according to the user's preference. Thus, even in a case where the acceptable ranges for the use fee, the distance to the destination, and the like vary according to the user, the acceptable ranges for each user can be taken into account, making it possible to set a guidance route that passes by a parking site that fits the user's preference.

Furthermore, the present embodiment is configured such that, at S32, the specified number of the on-street parking zones (for example, three zones) are selected, from among the on-street parking zones that are located in the vicinity of the destination, as candidates to be passed along the route. The present embodiment is also configured such that the search is conducted for the routes that lead to all of the selected on-street parking zones. However, an on-street parking zone that extends continuously over a plurality of links may also be counted as one zone. In that case, the route must be computed such that it passes by both the start point and the end point of the continuous on-street parking zone.

The user may also be allowed to input conditions (for example, an upper limit on the use fee, a straight-line distance to the destination, or the like) for the on-street parking zones for which guidance is desired. The on-street parking zones that are candidates to be passed along the route may then be selected based on the information that is input.

Further, in the present embodiment, the guidance is provided by displaying the information that pertains to the on-street parking zones in the form of marks and text on the liquid crystal display 17, but the guidance may also be provided by a guidance voice that is output from the speaker 18.

Guidance may also be provided in which the information that pertains to the on-street parking zones includes the time required to return to the reference position after parking in the on-street parking zone, the distance from the current position of the vehicle to the on-street parking zone, the time required to arrive at the on-street parking zone from the current position of the vehicle, and the like.

Guidance may also be provided in which the information that pertains to the on-street parking zones includes a degree of recommendation for each of the on-street parking zones. In this case, it is preferable for the degree of recommendation for the on-street parking zone to be determined based on the parking cost factor that is computed at S 15. For example, if the parking cost factor is not greater than 0.2, the degree of recommendation for the on-street parking zone is determined to be 1, indicating the highest recommendation. If the parking cost factor is not greater than 0.3, the degree of recommendation for the on-street parking zone is determined to be 2, indicating an intermediate level of recommendation. If the parking cost factor is 0.4 or higher, the degree of recommendation for the on-street parking zone is determined to be 3, indicating the lowest recommendation.

In the present embodiment, the parking sites for which the guidance is provided are on-street parking zones that are provided on the street, but the parking sites for which the guidance is provided may also include parking sites that are provided off of the street. For example, the present invention may be configured such that, in a case where the user indicates an intention to park even in an off-street parking site, a route is set that runs along a road having an on-street parking zone and also passes by an off-street parking site in the vicinity of the reference position, and guidance is provided for that route. Information that pertains to the off-street parking site may also be displayed on the driving guidance screens 61, 71 (FIGS. 13 and 14).

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1. A navigation device (1) that is installed in a vehicle, comprising:

    a reference position acquisition unit (13) that is adapted to acquire a reference position (51);
    an on-street parking zone search unit (13) that is adapted to find one or plural on-street parking zones (4, A, B, C, D, E, F) in the vicinity of the reference position (51) that is acquired by the reference position acquisition unit (13); and
    a route search unit (13) that is adapted to find a route that runs along a road having an on-street parking zone (4, A, B, C, D, E, F) found by the on-street parking zone search unit (13).

2. The navigation device (1) according to claim 1, wherein
the route search unit (13) is adapted to find a route (53) that starts from the reference position (51) and runs along a road having an on-street parking zone (4, A, B, C, D, E, F) found by the on-street parking zone search unit (13).

3. The navigation device (1) according to either one of claims 1 and 2, further comprising:

an information acquisition unit (13) that is adapted to acquire parking information that pertains to the on-street parking zone (4, A, B, C, D, E, F) that is found by the on-street parking zone search unit (13), wherein
the route search unit (13) is adapted to include a selection unit (13) that, in a case where the on-street parking zone search unit finds a plurality of the on-street parking zones, is adapted to select a specified number of the on-street parking zones that are found by the on-street parking zone search unit, based on the parking information that is acquired by the information acquisition unit, and
the route search unit is adapted to find a route (53) that runs along a road having an on-street parking zone selected by the selection unit.

4. The navigation device (1) according to claim 3, wherein
the selection unit (13) is adapted to select the on-street parking zones (4, A, B, C, D, E, F) based on the distances from the reference position (51) to the on-street parking zones.

5. The navigation device (1) according to claim 3, wherein
the selection unit (13) is adapted to select the on-street parking zones (4, A, B, C, D, E, F) based on the use fees for the on-street parking zones.

6. The navigation device (1) according to claim 3, wherein
the selection unit (13) is adapted to select the on-street parking zones (4, A, B, C, D, E, F) based on the distances over which parking is possible in the on-street parking zones.

7. The navigation device (1) according to claim 3, wherein
the selection unit (13) is adapted to select the on-street parking zones (4, A, B, C, D, E, F) based on the continuousness of the on-street parking zones.

8. The navigation device (1) according to claim 3, wherein
the selection unit (13) is adapted to select the on-street parking zones (4, A, B, C, D, E, F) based on the vacant space probabilities for the on-street parking zones.

9. The navigation device (1) according to any one of claims 1 to 8, further comprising:

a specification unit (13) that is adapted to specify, from among the on-street parking zones (4, A, B, C, D, E, F) that are located on the route (53) that is found by the route searching unit (13), an on-street parking zone that is located on the first road along the route that the vehicle will travel along; and
a basic route search unit (13) that is adapted to find a route from the current position of the vehicle to the on-street parking zone that is specified by the specification unit (13).

10. A computer program that comprises program code which, when run on a computer, causes the computer to perform the steps of:

acquiring a reference position (51);
finding one or plural on-street parking zones (4, A, B, C, D, E, F) in the vicinity of the reference position (51) that is acquired by the reference position acquisition step; and
finding a route (53) that runs along a road having an on-street parking zone found by the on-street parking zone search step.

# F I G . 1

NAVIGATION DEVICE

## CURRENT POSITION DETECTION PORTION

- GPS
- GEOMAGNETIC SENSOR
- VEHICLE SPEED SENSOR
- STEERING SENSOR
- GYROSCOPIC SENSOR

## DATA STORAGE PORTION

MAP INFORMATION DATA BASE

- LINK DATA
- NODE DATA
- FACILITY DATA
- SEARCH DATA
- ...

## NAVIGATION ECU

RAM

CPU

FLASH MEMORY

ROM

OPERATION PORTION

## INFORMATION OUTPUT PORTION

LIQUID CRYSTAL DISPLAY

SPEAKER

COMMUNICATION MODULE

# FIG.2

# FIG.3

FACILITY DATA PERTAINING TO ON-STREET PARKING ZONES

| IDENTIFICATION ID | A | B | C | D | ··· | X |
|---|---|---|---|---|---|---|
| LINK ID | 000001 | 002468 | 000123 | 004444 | ··· | 004989 |
| HOURS AVAILABLE | 0:00–24:00 | 0:00–24:00 | 0:00–24:00 | 8:00–18:00 | ··· | 0:00–24:00 |
| USE FEE | NO CHARGE | 700 YEN / 60 MINUTES | 100 YEN / 60 MINUTES | 200 YEN / 60 MINUTES | ··· | NO CHARGE |
| LOCATION COORDINATES | (x1, y1)–(x2, y2) | (x3, y3)–(x4, y4) | (x5, y5)–(x6, y6) | (x7, y7)–(x8, y8) | ··· | (x21, y21)–(x22, y22) |
| VACANT SPACE PROBABILITY | 0.42 | 0.45 | 0.55 | 0.35 | ··· | 0.95 |
| USER RESTRICTIONS | NO | NO | NO | NO | ··· | YES (RESIDENTS ONLY) |
| ··· | ··· | ··· | ··· | ··· | ··· | ··· |

EP 2 075 539 A2

# FIG.4

USE FEE COST FACTORS

| FEE | COST FACTOR |
|---|---|
| NO CHARGE | 0.5 |
| 1 – 10 YEN / MINUTE | 0.6 |
| 11 – 20 YEN / MINUTE | 0.7 |
| 21 – 30 YEN / MINUTE | 0.8 |
| 31 – 50 YEN / MINUTE | 0.9 |
| 51 YEN OR HIGHER / MINUTE | 1.0 |

# FIG.5

DISTANCE COST FACTORS

| DISTANCE FROM DRIVING START POSITION | COST FACTOR |
|---|---|
| 0 – 50m | 0.6 |
| 51m – 100m | 0.7 |
| 101m – 500m | 0.8 |
| 501m – 1000m | 0.9 |
| 1001m OR LONGER | 1.0 |

# FIG.6

```
        ┌─────────────┐
        │    START    │
        └─────────────┘
               │  S1
               ▼
┌──────────────────────────────┐
│  ACQUIRE REFERENCE POSITION   │
└──────────────────────────────┘
               │  S2
               ▼
┌──────────────────────────────┐
│ PARKING ZONE SEARCH PROCESSING │
└──────────────────────────────┘
               │  S3
               ▼
┌──────────────────────────────┐
│   ROUTE SEARCH PROCESSING     │
└──────────────────────────────┘
               │  S4
               ▼
┌──────────────────────────────┐
│ GUIDANCE ROUTE SETTING PROCESSING │
└──────────────────────────────┘
               │
               ▼
        ┌─────────────┐
        │     END     │
        └─────────────┘
```

# F I G . 7

```
  ( PARKING ZONE SEARCH PROCESSING )
                    |
                    | S11
                    ▼
        INITIALIZE ON-STREET
        PARKING ZONE LIST
                    |
   S12              ▼
        SEARCH FOR ON-STREET
        PARKING ZONE
                    |
                    | S13
                    ▼
        COMPUTE DISTANCE FROM
        REFERENCE POSITION
                    |
                    | S14
        NO         ◇ WITHIN
      ◀────────── SPECIFIED DISTANCE?
                    |
                    | YES  S15
                    ▼
        COMPUTE PARKING
        COST FACTOR
                    |
                    | S16
                    ▼
        STORE IN ON-STREET
        PARKING ZONE LIST
                    |
                    | S17
                    ▼          NO
        ◇ SEARCH FINISHED? ─────▶
                    |
                    | YES
                    ▼          S18
        ◇ DOES                       NO
        PARKING COST FACTOR ──────────▶  SET GUIDANCE-ELIGIBLE   S20
        SATISFY CONDITION?               PARKING ZONE FLAG TO ZERO
                    |                            |
                    | YES                        | S21
        S19         ▼                            ▼
        SET GUIDANCE-ELIGIBLE            CHANGE PARKING
        PARKING ZONE FLAG TO 1           COST FACTOR TO 1
                    |                            |
                    ▼◀───────────────────────────
        S22         ▼
        NO   ◇ PROCESSING
      ◀──── FINISHED FOR ALL ON-STREET
             PARKING ZONES?
                    |
                    | YES
                    ▼
             ( RETURN )
```

20

# FIG.8

```
        ┌─────────────────────────┐
        │     ROUTE SEARCH        │
        │     PROCESSING          │
        └─────────────────────────┘
                     │
                     ▼              ⟋ S31
   ┌──────────────────────────────────────────┐
   │   MULTIPLY LINK COST BY COST FACTORS      │
   └──────────────────────────────────────────┘
                     │
                     ▼              ⟋ S32
   ┌──────────────────────────────────────────┐
   │    SELECT, FROM AMONG ON-STREET PARKING   │
   │  ZONES IN VICINITY OF DRIVING START       │
   │  POSITION, SPECIFIED NUMBER OF ON-STREET  │
   │   PARKING ZONES TO BE PASSED ALONG        │
   └──────────────────────────────────────────┘
                     │
                     ▼              ⟋ S33
   ┌──────────────────────────────────────────┐
   │  USE DYKSTRA METHOD TO SEARCH FOR ROUTE   │
   │  THAT TRAVERSES ROADS ON WHICH SELECTED   │
   │   ON-STREET PARKING ZONES ARE PROVIDED    │
   └──────────────────────────────────────────┘
                     │
                     ▼
        ┌─────────────────────────┐
        │         RETURN          │
        └─────────────────────────┘
```

# FIG.9

ON-STREET PARKING ZONES LIST

| | A | B | C | D | ··· | X |
|---|---|---|---|---|---|---|
| DISTANCE FROM DRIVING START POSITION | 700m | 200m | 20m | 100m | ··· | 1200m |
| PARKING COST FACTOR | 0.261 | 0.308(⇒1) | 0.162 | 0.273 | ··· | 1 |
| GUIDANCE-ELIGIBLE PARKING ZONE FLAG | 1 | 0 | 1 | 1 | ··· | 0 |

EP 2 075 539 A2

# F I G . 10

B
55
C
51
G
54
A
53
D
56
F
57
E

ON-STREET PARKING ZONE THAT
SATISFIES SPECIFIED CONDITION

ON-STREET PARKING ZONE THAT
DOES NOT SATISFY SPECIFIED CONDITION

# F I G . 11

START

S41

SPECIFY ON-STREET PARKING ZONES
ON GUIDANCE ROUTE,
AND CREATE EN ROUTE LIST
BASED ON INFORMATION ACQUIRED
FROM DATA BASE AND THE LIKE

S42

ACQUIRE CURRENT
POSITION OF VEHICLE

S43

FROM EN ROUTE LIST,
EXTRACT INFORMATION ABOUT
ON-STREET PARKING ZONES
THAT ARE LOCATED
WITHIN MAP SCREEN

S44

DRAW MAP TOGETHER WITH
EXTRACTED ON-STREET
PARKING ZONE INFORMATION

S45

TWO-SCREEN
DISPLAY MODE?  NO

YES

S46

FROM EN ROUTE LIST,
EXTRACT INFORMATION ON THREE
ON-STREET PARKING ZONES AHEAD

S47

DISPLAY INFORMATION ABOUT
THREE ON-STREET PARKING ZONES
AHEAD ON RIGHT-SIDE SCREEN

S48

NO  STOPPED MOVING?

YES

END

# FIG.12

EN ROUTE LIST

| SEQUENCE NUMBER | 1 | 2 | 3 |
|---|---|---|---|
| DISTANCE FROM DRIVING START POSITION | 100m | 200m | 500m |
| LINK ID | 003458 | 003462 | 003463 |
| LOCATION COORDINATES | (x11,y11)–(x12,y12) | (x21,y21)–(x22,y22) | (x31,y31)–(x32,y32) |
| HOURS AVAILABLE | 7:00–23:00 | 00:00–24:00 | 0:00–24:00 |
| USE FEE | 100 YEN / 60 MINUTES | NO CHARGE | 200 YEN / 60 MINUTES |
| VACANT SPACE PROBABILITY | 0.66 | 0.50 | 0.82 |
| USER RESTRICTIONS | NO | NO | NO |
| . . . | . . . | . . . | . . . |

EP 2 075 539 A2

# F I G . 13

TWO PARKING ZONES AHEAD
200 METERS FROM DRIVING START POSITION
NO CHARGE 0:00 – 24:00
VACANT SPACE PROBABILITY: 0.50
NO USER RESTRICTIONS

THREE PARKING ZONES AHEAD
100 METERS FROM DRIVING START POSITION
100 YEN / 60 MINUTES 7:00 – 23:00
VACANT SPACE PROBABILITY: 0.66
NO USER RESTRICTIONS

ON-STREET PARKING ZONE THAT
SATISFIES SPECIFIED CONDITION

ON-STREET PARKING ZONE THAT
DOES NOT SATISFY SPECIFIED CONDITION

# FIG. 14

ONE PARKING ZONE AHEAD
500 METERS FROM DRIVING START POSITION
200 YEN / 60 MINUTES 0:00 – 24:00
VACANT SPACE PROBABILITY: 0.82
NO USER RESTRICTIONS

TWO PARKING ZONES AHEAD
200 METERS FROM DRIVING START POSITION
NO CHARGE 0:00 – 24:00
VACANT SPACE PROBABILITY: 0.50
NO USER RESTRICTIONS

THREE PARKING ZONES AHEAD
100 METERS FROM DRIVING START POSITION
100 YEN / 60 MINUTES 7:00 – 23:00
VACANT SPACE PROBABILITY: 0.66
NO USER RESTRICTIONS

ON-STREET PARKING ZONE THAT
SATISFIES SPECIFIED CONDITION

ON-STREET PARKING ZONE THAT
DOES NOT SATISFY SPECIFIED CONDITION

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001349740 A